# EUROPEAN PATENT SPECIFICATION

(11) **EP 2 762 580 B1**
(45) Date of publication and mention of the grant of the patent: **04.11.2020**
(21) Application number: 12835327.3
(22) Date of filing: 27.09.2012
(51) Int. Cl.: C22C 38/00, C22C 38/02, C22C 38/04, C22C 38/06, C22C 38/12, B32B 15/01, C22C 38/14, C22C 38/16, C22C 38/26, C22C 38/08, C23C 2/02, C23C 2/06, C22C 18/04, C23C 2/28, C21D 9/46, C21D 8/02, C21D 8/04, C21D 9/48

(54) **HOT-DIP GALVANIZED STEEL SHEET AND METHOD FOR PRODUCING SAME**
FEUERVERZINKTES STAHLBLECH UND HERSTELLUNGSVERFAHREN DAFÜR
TÔLE EN ACIER GALVANISÉE PAR IMMERSION À CHAUD, ET PROCÉDÉ DE FABRICATION DE CELLE-CI

(30) Priority: 29.09.2011 JP 2011215592
(43) Date of publication of application: 06.08.2014
(73) Proprietor: JFE Steel Corporation, Tokyo, 100-0011 (JP)
(72) Inventor: TAKASHIMA, Katsutoshi, Tokyo 100-0011 (JP); TOJI, Yuki, Tokyo 100-0011 (JP); KARIYA, Nobusuke, Tokyo 100-0011 (JP); HASEGAWA, Kohei, Tokyo 100-0011 (JP)
(74) Representative: Grünecker Patent- und Rechtsanwälte PartG mbB
(86) International application number: PCT/JP2012/006195
(87) International publication number: WO 2013/046695

(56) References cited:
- EP-A1- 1 195 447
- EP-A1- 1 354 972
- EP-A2- 0 432 498
- JP-A- H05 125 485
- JP-A- H11 343 535
- JP-A- 2001 303 180
- JP-A- 2002 053 931
- JP-A- 2003 247 043
- JP-A- 2004 002 909
- JP-A- 2004 211 126
- JP-A- 2004 211 138
- JP-A- 2007 092 127
- JP-A- 2007 092 127
- JP-A- 2008 248 358
- JP-A- 2008 274 397
- JP-A- 2011 153 368

## Description

### TECHNICAL FIELD

The present invention relates to a hot-dip galvanized steel sheet that is excellent in workability and has high yield ratio, and a method for producing/manufacturing the same. More particularly, the present invention relates to a high-strength thin steel sheet that can be suitably applied to members for structural parts of automobiles. Here, the yield ratio (YR) is a ratio of a yield strength (YS) with respect to a tensile strength (TS), which is represented by YR = YS/TS.

### BACKGROUND ART

In recent years, along with growing concern over environmental issues, CO₂ emission regulations are being further tightened, and the improvement of fuel efficiency through reduction of automobile body weight has become a major issue in the automobile field. To this end, positive measures are taken to apply high-strength hot-dip galvanized steel sheets to automobile parts so as to reduce the thickness thereof, and application of steel sheets having a tensile strength (TS) level of at least 590 MPa is promoted.

High-strength hot-dip galvanized steel sheets for use in structural members and reinforcing members of automobiles are required to be excellent in stretch flangeability and ductility. In particular, steel sheets for use in members to be formed into complex shapes are insufficient to merely excel in only one of the properties such as elongation and stretch flangeability (hole expansion formability), but also required to be excellent in both of the properties.

Further, it may take some time before the manufactured hot-dip galvanized steel sheet is actually subjected to press forming, and it is important to keep the steel sheet from being deteriorated in elongation due to aging in the lapse of time. The steel sheets are also required to be high in impact energy absorption property. In this regard, it is effective to increase the yield ratio to improve the impact energy absorption property, so as to efficiently absorb impact energy with small deformation.

In view of the above, in order to increase the strength of a steel sheet so as to obtain tensile strength of at least 590 MPa, it is effective to have hardened ferrite as the matrix phase, or to utilize hard phases such as martensite or retained austenite. In particular, a high-strength steel sheet which includes hardened ferrite obtained through precipitation-hardening with the addition of carbide forming elements such as niobium (Nb) is capable of reducing the need to add alloying elements for ensuring a predetermined strength, and thus can be manufactured at low cost.

For example, Patent Literature 1 discloses a method for manufacturing a hot-dip galvanized steel sheet which is precipitation-hardened with the addition of Nb and has a tensile strength of at least 590 MPa and excellent resistance to secondary working embrittlement after press forming. Patent Literature 2 discloses a high-strength cold rolled steel sheet which is precipitation-hardened with the addition of Nb and Ti and has a yield ratio larger than 0.70 and less than 0.92, excellent stretch-flangeability, and impact energy absorption property, and a manufacturing method thereof. Further, Patent Literature 3 discloses a high-strength cold rolled steel sheet with a high tensile strength of at least 590 MPa which is precipitation-hardened by the addition of Nb and Ti and has a steel sheet structure comprising recrystallized ferrite, unrecrystallized ferrite, and pearlite.

Meanwhile, the followings are disclosed as methods of utilizing hard phases such as martensite and retained austenite. For example, Patent Literature 4 discloses a high-strength steel sheet excellent in stretch flangeability and collision resistance property, which has a structure including ferrite as the main phase and martensite as the second phase, in which the maximum grain size of the martensite phase is 2 µm or less and the area ratio thereof is at least 5 %. Further, Patent Literature 5 discloses a high-strength hot-dip galvannealed steel sheet excellent in workability, in which the volume fractions of martensite and retained austenite are controlled, and a manufacturing method thereof.

JP 2004 211126 A discloses a high tension cold-rolled hot-dip galvanized steel sheet having an ultrafine structure excellent in the balance of strength-elongation as well as ductility and stretch flange formability, wherein ferrite is the main phase with the average grain size of ferrite being 3.5 µm or less, and the second phase is selected among bainite, martensite, tempered martensite.

### CITATION LIST

### Patent Literature

PTL 1: JP 3,873,638 B
PTL 2: JP 2008-174776 A
PTL 3: JP 2008-156680 A
PTL 4: JP 3,887,235 B
PTL 5: JP 3,527,092 B

### SUMMARY OF INVENTION

### (Technical Problem)

However, according to the technology disclosed in Patent Literature 1, the steel sheet has insufficient ductility to ensure workability required in the aforementioned applications such as structural parts and reinforcing parts.

Further, according to the technology disclosed in Patent Literature 2, Al content in the steel sheet is less than 0.010 %, which fails to perform sufficient deoxidation of the steel and fixation of N as precipitates, making it difficult to mass-produce sound steel. In addition, the steel contains oxygen (O) and has oxides dispersed therein, which leads to a problem that the steel varies considerably in material quality, in particular, in local ductility.

According to the technology disclosed in Patent Literature 3, unrecrystallized ferrite is uniformly dispersed so as to prevent deterioration in ductility, but the ductility thus obtained still fails to attain sufficient formability. The technology disclosed in Patent Literature 4, which utilizes martensite, gives no consideration to ductility. Further, the technology disclosed in Patent Literature 5, which utilizes martensite and retained austenite, provides a steel sheet with a yield ratio of less than 70 %, and no consideration is given to the hole expansion formability.

As described above, it has been difficult to improve workability of a high-strength hot-dip galvanized steel sheet with high yield ratio, because the ductility and the hole expansion formability both need to be improved.

Therefore, in order to solve the problems inherent in the conventional art, the present invention has an object to provide a high-strength hot-dip galvanized steel sheet that is excellent in workability, that is, excellent in both ductility and hole expansion formability, while having a high yield ratio, and also to provide a method for manufacturing the same.

### (Solution to Problem)

The inventors of the present invention have made intensive studies on the means for solving the aforementioned problems, and have found out as follows. That is, in addition to enhancing the precipitation using Nb, the average grain size and the volume fraction of ferrite, the average grain size and the volume fraction of martensite, and the volume fraction of pearlite in the microstructure of a steel sheet may be controlled, so as to obtain a high-strength hot-dip galvanized steel sheet having high yield ratio of at least 70 % and excellent workability. It has been hitherto considered, in terms of workability, that the presence of martensite in the steel sheet microstructure may improve the elongation, but deteriorates the hole expansion formability and even reduces the YR. However, the inventors of the present invention have found out that the volume fraction and the crystal grain size of martensite can be controlled, and the solid solution strengthening of ferrite through the addition of Si and the precipitation strengthening and the crystal grain refinement through the addition of Nb may be utilized, so as to improve the elongation and the hole expansion formability without reducing the YR while preventing deterioration in elongation due to aging.

Specifically, the inventors have found out that Nb, that is effective for precipitation strengthening which contributes to high yield ratio and high strength, can be added to 0.010 % to 0.100 %, and the steel sheet structure can be controlled to have the volume fraction of 90 % or more for ferrite having an average crystal grain size of 15 µm or less, the volume fraction of 0.5 % or more and less than 5.0 % for martensite having an average crystal grain size of 3.0 µm or less, and the volume fraction of 0.5 % to 5.0 % for pearlite, so as to obtain a high-strength hot-dip galvanized steel sheet having excellent workability and high yield ratio, to thereby complete the present invention.

The invention is defined in the claims.

### (Advantageous Effect of Invention)

According to the present invention, the chemical composition and the microstructure of a steel sheet can be controlled, to thereby stably obtain a high-strength hot-dip galvanized steel sheet having high yield ratio, which has a tensile strength of at least 590 MPa, a yield ratio of at least 70 %, a total elongation of at least 26.5 %, and a hole expansion ratio of at least 60 %, and is excellent in elongation property and stretch flangeability with less degradation in elongation property due to aging.

### DESCRIPTION OF EMBODIMENTS

The present invention will be described in further detail hereinafter.

First, the reasons for restricting the content of each chemical component of the hot-dip galvanized steel sheet of the present invention to the following ranges are described. In the following, the unit "%" of each chemical component below is "mass %" unless otherwise specified.

### 0.05 % ≤ C ≤ 0.12 %

Carbon (C) is an element effective in enhancing the strength of the steel sheet. In particular, carbon is combined with a carbide-forming element such as niobium (Nb) so as to form a fine alloy carbide or a fine alloy carbonitride, to thereby contribute to enhancing the strength of the steel sheet. Further, carbon is an clement necessary for forming martensite and pearlite in the present invention, and contributes to enhancing the strength of the steel sheet. C content needs to be at least 0.05 % in order to obtain these effects. On the other hand, C content ot more than 0.15 % leads to deterioration in spot weldability. In view of ensuring more excellent weldability, C content is 0.12 % or less.

### 0.20 % ≤ Si ≤ 0.90 %

Silicon (Si) is an element which contributes to enhancing of the strength of the steel sheet, and is also high in work hardenability, so as to make the steel sheet less susceptible to deterioration in elongation in spite of an increase in strength, to thereby contribute to improving the strength/ductility balance. Further, Si has an effect of suppressing the formation of voids in the interface between ferrite and martensite, or between ferrite and pearlite, through solid solution strengthening of the ferrite phase. In order to obtain the effect, Si content needs to be at least 0.10 %. In particular, Si content of 0.20 % or more is added in terms of the improvement in strength/ductility balance. On the other hand, Si content over 0.90 % leads to significant deterioration in quality of hot-dip galvanized coating, and therefore Si content is 0.90 % or less, and preferably less than 0.70 %.

### 1.0 % ≤ Mn ≤ 1.9 %

Manganese (Mn) is an element which contributes to enhancing the strength of the steel sheet through solid solution strengthening and generation of the second phase. Mn content needs to be at least 1.0 % in order to obtain the effect. On the other hand, Mn content over 1.9 % results in an excessively high volume fraction of martensite or pearlite, and therefore the Mn content needs to be 1.9 % or less.

### 0.005 % ≤ P ≤ 0.10 %

Phosphorus (P) is an element which contributes to enhancing the strength of the steel sheet through solid solution strengthening. P content needs to be at least 0.005 % in order to obtain the effect. Meanwhile, P content over 0.10 % causes significant segregation at the grain boundaries, with the result that the grain boundaries are embrittled and the weldability is impaired. Therefore, P content is 0.10 % or less. P content is preferably 0.05 % or less.

### 0.0005 % ≤ S ≤ 0.0050 %

Too high Sulfur (S) content produces sulfide such as MnS in large amount, which deteriorates local elongation typified by stretch flangeability, and thus the upper limit of S content is 0.0050 %. Excessively low content of S leads to an increase in steel production cost, and thus S content needs to be reduced without falling below 0.0005 %.

### 0.01 % ≤ Al ≤ 0.10 %

Aluminum (Al) is an element effective in deoxidizing, and needs to be added to at least 0.01 % in order to produce the deoxidizing effect. However, Al content exceeding 0.10 % saturates the effect, and therefore Al content is 0.10 % or less. Al content is preferably 0.05 % or less.

### N ≤ 0.0050 %

Similarly to C, Nitrogen (N) is combined with niobium (Nb) so as to form a compound to be turned into an alloy nitride or an alloy carbonitride, to thereby contribute to enhancing the strength of the steel sheet. However, a nitride is likely to be generated at relatively high temperature and tends to be coarse, which makes a relatively smaller contribution to enhancing the strength as compared to a carbide. Further, solute N in the steel sheet has an effect of degrading the elongation after aging. For this reason, in order to attain high-strengthening and to suppress deterioration in elongation after aging, it is advantageous to reduce N content so as to generate more alloy carbides. In view of this, N content is 0.0050 % or less, preferably, 0.0040 % or less.

### 0.010 % ≤ Nb ≤ 0.100 %

Niobium (Nb) is combined with C or N so as to form a compound to be turned into a carbide or a carbonitride. Nb is also effective in grain-refinement of crystal grains, to thereby contribute to increasing the yield ratio and enhancing the strength of the steel sheet. Nb content needs to be at least 0.010 % in order to obtain the effect, and more preferably at least 0.020 %. However, Nb content larger than 0.100 % results in significant deterioration in formability, and thus the upper limit value of Nb content is 0.100 % or less, preferably 0.080 % or less, and more preferably less than 0.050 %.

According to the present invention, in addition to the aforementioned basic components, the following optional components each may also be added within a predetermined range as necessary.

### Ti ≤ 0.10 %

Similarly to Nb, Titanium (Ti) forms a fine carbonitride and is also effective in grain-refinement of crystal grains, so as to be capable of contributing to increasing the strength of the steel sheet, and thus can be contained as necessary. However, Ti content larger than 0.10 % significantly deteriorates formability, and therefore Ti content is 0.10 % or less, preferably 0.05 % or less. Meanwhile, in the case of adding Ti for the purpose of producing an effect of increasing the strength, Ti content may preferably be at least 0.005 %.

### V ≤ 0.10 %

Similarly to Nb, vanadium (V) also forms a fine carbonitride, and has an effect of grain-refinement of crystal grains, while contributing to increasing the strength. Therefore, vanadium may be added as necessary. However, even if V content is increased to exceed 0.10 %, there cannot be obtained a corresponding effect of increasing the strength commensurate with the increase above 0.10 %, while causing a rise in alloy cost instead. Therefore, V content is 0.10 % or less. Meanwhile, in the case of adding V for the purpose of producing an effect of increasing the strength, V content may preferably be at least 0.005 %.

### Cr ≤ 0.50 %

Chromium (Cr) is an element which contributes to enhancing the strength of the steel sheet by improving quench hardenability and generating the second phase, and may be added as necessary. In order to obtain these effects, Cr content is preferably at least 0.10 %. On the other hand, Cr content over 0.50 % produces no further improvement in effectiveness, and therefore Cr content is 0.50 % or less.

### Mo ≤ 0.50 %

Molybdenum (Mo) is an element which contributes to enhancing the strength of the steel sheet by improving quench hardenability and generating the second phase, and may be added as necessary. Mo content is preferably at least 0.05 % in order to obtain the effect. On the other hand, Mo content over 0.50 % produces no further improvement in effectiveness, and therefore Mo content is 0.50 % or less.

### Cu ≤ 0.50 %

Copper (Cu) is an element which contributes to enhancing the strength of the steel sheet through solid solution strengthening and also by improving quench hardenability and generating the second phase, and may be added as necessary. Cu content is preferably at least 0.05 % in order to obtain the effect. On the other hand, Cu content over 0.50 % produces no further improvement in effectiveness, while making instead the steel sheet more susceptible to surface defect resulting from Cu, and therefore Cu content is 0.50 % or less.

### Ni ≤ 0.50 %

Nickel (Ni) is an element which also contributes to enhancing the strength of the steel sheet, similarly to Cu, through solid solution strengthening and also by improving quench hardenability and generating the second phase. Further, Ni produces an effect of suppressing the surface defect resulting from Cu when added together with Cu, and thus may be added as necessary. Ni content is preferably at least 0.05 % in order to obtain these effects. On the other hand, Ni content over 0.50 % produces no further improvement in effectiveness, and therefore Ni content is 0.50 % or less.

### B ≤ 0.0030 %

Boron (B) is an element which contributes to enhancing the strength of the steel sheet by improving quench hardenability and generating the second phase, and may be added as necessary. B content is preferably at least 0.0005 % in order to obtain the effect. On the other hand, B content over 0.0030 % saturates the effect, and thus B content is 0.0030 % or less.

### At least one selected from Ca (0.001 % ≤ Ca ≤ 0.005 %) and REM (0.001 % ≤ REM ≤ 0.005 %)

Calcium (Ca) and rare earth metal (REM) each are an element which spheroidizes the shape of a sulfide so as to contribute to preventing the sulfide from negatively affecting the hole expansion formability, and may be added as necessary. Ca and REM each may preferably be added to at least 0.001 % to obtain these effects. On the other hand, the content over 0.005 % saturates the effects, and thus the content is 0.005 % or less.

In addition to the aforementioned chemical components, the balance includes Fe and incidental impurities.

Examples of the incidental impurities may include antimony (Sb), tin (Sn), and cobalt (Co), which may be added to 0.01 % or less for Sb, 0.1 % or less for Sn, 0.01 % or less for zinc (Zn), and 0.1 % or less for Co, without falling out of the allowable ranges.

Next, the microstructure of the hot-dip galvanized steel sheet of the present invention is described in detail.

That is, it is essential that the microstructure is a complex phase which contains: ferrite having an average grain size of 15 µm or less to at least 90 % in volume fraction; martensite having an average grain size of 3.0 µm or less to 0.5 % or more and less than 5.0 % in volume fraction; pearlite 0.5 % to 5.0 % in volume fraction; and the balance being a phase generated at low temperature. The volume fraction herein refers to a volume fraction with respect to the entire microstructure of the steel sheet, and the same applies hereinafter.

First, when the volume fraction of ferrite is less than 90 %, the first ferrite phase is reduced and the hard second phase is increased, with the result that a large difference in hardness is observed at many points between the second phase and the soft ferrite, and the hole expansion formability is impaired. Therefore, the volume fraction of ferrite is at least 90 %, and preferably at least 92 %. Further, when the ferrite has the average grain size of larger than 15 µm, voids are easily formed on a punched end surface in the hole expansion process, and hence excellent hole expansion formability cannot be obtained. For this reason, the average grain size of ferrite is 15 µm or less. In particular, when a value obtained by dividing the volume fraction of ferrite having a grain size of 5 µm or less by the volume fraction of the entire ferrite is 0.25 or more, it is possible to suppress voids from being connected to one another along the crystal grains in a hole expansion test. Therefore, a value obtained by dividing the volume fraction of ferrite having a grain size of 5 µm or less by the volume fraction of the entire ferrite in the microstructure of the steel sheet is preferably at least 0.25.

It should be noted that the "ferrite" herein refers to any type of ferrite including recrystallized ferrite and unrecrystallized ferrite.

Next, when the volume fraction of martensite is smaller than 0.5 %, there is produced only a small effect of enhancing the strength and the elongation property deteriorates due to aging. Therefore, the volume fraction of martensite is at least 0.5 %. On the other hand, when the volume fraction of martensite is 5.0 % or more, mobile dislocations are generated by the hard martensite in the ferrite surrounding therearound, which reduces the yield ratio and deteriorates the hole expansion formability. For this reason, the volume fraction of martensite is less than 5.0 %, and preferably 3.5 % or less. Meanwhile, the average grain size of martensite over 3.0 µm increases the area of each void to be generated on a punched end surface in the hole expansion process, with the result that the voids are easily connected to one another during the hole expansion test, and hence excellent hole expansion formability cannot be obtained. Therefore, the average grain size of martensite is 3.0 µm or less.

Further, the volume fraction of pearlite exceeding 5.0 % causes significant generation of voids at an interface between ferrite and pearlite, and the voids are likely to be connected to one another. Therefore, in view of workability, the volume fraction of pearlite is 5.0 % or less. The volume fraction of pearlite is 0.5 % or more because the presence of pearlite has an effect of increasing the yield ratio and also enhancing the strength of the steel sheet.

The microstructure may also include other structures than ferrite, martensite, and pearlite described above. The balance in this case may be a type of a phase formed at low temperature selected from bainite, retained austenite, and spherodized cementite, or may be a mixed structure including a combination of two or more of the phases. The balance structure other than ferrite, martensite, and pearlite is less than 5.0 % in total in volume fraction in terms of formability, and therefore, it is needless to say that the aforementioned balance structure may be 0 volume %.

The aforementioned microstructure can be obtained through manufacturing under the following conditions by using chemical compositions satisfying the aforementioned ranges.

Further, the hot-dip galvanized steel sheet according to the present invention contains Nb-based precipitates having an average grain size of 0.10 µm or less. Strains around Nb-based precipitates with an average grain size of 0.10 µm or less effectively serve as obstacles to the dislocation movement, which contributes to enhancing the strength of steel.

Further, the hot-dip galvanizing layer may preferably be formed as a galvanizing layer on a surface of the steel sheet with a coating amount of 20 to 120 g/m² per one surface. The reason is that the coating amount of less than 20 g/m² may make it difficult to ensure corrosion resistance, whereas the coating amount over 120 g/m² may leads to deterioration in resistance to coating exfoliation.

Next, a method for manufacturing the hot-dip galvanized steel sheet of the present invention is described.

The hot-dip galvanized steel sheet of the present invention can be manufactured by a method including: preparing a steel slab having the chemical composition satisfying the aforementioned ranges; hot rolling the steel slab under the conditions with a hot-rolling start temperature of 1,150 °C to 1,270 °C and a finish rolling completing temperature of 830 °C to 950 °C to be formed into a hot rolled steel sheet, which is cooled and then coiled at a coiling temperature within a range of 450 °C to 650 °C; which is pickled and then cold rolled to be formed into a cold rolled steel sheet; heating thereafter the cold rolled steel sheet at an average heating rate of at least 5 °C/s to a temperature range of 650 °C or above; holding the heated steel sheet in a temperature range of 730 °C to 880 °C for 15 seconds to 600 seconds; subsequently cooling the held steel sheet at an average cooling rate of 3 °C/s to 30 °C/s to a temperature range of 600 °C or below; subjecting thereafter the cooled steel sheet to hot-dip galvanizing process so as to be formed into a hot-dip galvanized steel sheet; and cooling the hot-dip galvanized steel sheet to a room temperature.

In the aforementioned manufacturing process, a cold rolled steel sheet is used as a base steel sheet. However, the steel sheet subjected to the above-mentioned hot rolling and pickling may also be used as the base steel sheet. The manufacturing process is similarly performed as in the case of using the cold rolled steel sheet, in which the steel sheet is heated, after pickling, at an average heating rate of at least 5 °C/s to be in the temperature range of 650 °C or above, held in the temperature range of 730 °C to 880 °C for 15 seconds to 600 seconds, then cooled at the average cooling rate of 3 °C/s to 30 °C/s to be in the temperature range of 600 °C or below, and subjected thereafter to hot-dip galvanizing process and cooled to the room temperature.

According to the method of manufacturing the hot-dip galvanized steel sheet with high yield ratio of the present invention, the hot-dip galvanized steel sheet may further be subjected to galvannealing process in a temperature range of 450 °C to 600 °C.

Further, in the hot rolling step, the cast steel slab may preferably be subjected to hot rolling in a temperature range of 1,150 °C to 1,270 °C without being reheated or after being reheated to be in a temperature range of 1,150 °C to 1,270 °C. Although the steel slab to be used is preferably manufactured through continuous casting so as to prevent macrosegregation of the components, the steel slab may also be manufactured through ingot casting or thin slab casting. The hot rolling step is preferably performed under a condition where the steel slab is first subjected to hot rolling at a hot-rolling start temperature in a range of 1,150 °C to 1,270 °C. According to the present invention, in addition to a conventional method in which a steel slab once cooled to a room temperature after being casted is reheated, there may also be employed, without any problem, energy-saving process such as hot charge rolling and hot direct rolling where a warm slab is directly charged into a heating furnace without being cooled, a heat-retained steel slab is immediately hot rolled, or a cast hot slab is directly hot rolled.

In the following, each of the manufacturing steps is described in detail.

### [Hot Rolling Step]

### • Hot-rolling start temperature: 1,150 °C to 1,270 °C

Hot-rolling start temperature is preferably set to be in a range of 1,150 °C to 1,270 °C, because the temperature falling below 1,150 °C leads to a deterioration of productivity by an increase in rolling load, while the temperature exceeding 1,270 °C results in mere increase in the heating cost.

### • Finish rolling completing temperature: 830 °C to 950 °C

The finish rolling completing temperature is at least 830 °C because the hot rolling needs to be completed in the austenite single phase region so as to attain uniformity in structure in the steel sheet and to reduce anisotropy in the material quality in order to improve the elongation property and the hole expansion formability after annealing. However, when the finish rolling completing temperature exceeds 950 °C, there is a fear that the hot rolled structure is coarsened and properties after annealing are deteriorated. Therefore, the finish rolling completing temperature is set to be in a range of 830 °C to 950 °C. Although the cooling condition after finish rolling is not specifically limited, the steel sheet may preferably be cooled to a coiling temperature at an average cooling rate of 15 °C/s or more.

### • Coiling Temperature: 450 °C to 650 °C

The upper limit of the coiling temperature is set to 650 °C because the coiling temperature over 650 °C causes precipitates such as alloy carbides generated in the cooling process after hot rolling to be significantly coarsened, which leads to deterioration in strength after annealing. The coiling temperature is preferably 600 °C or lower. On the other hand, when the coiling temperature is lower than 450 °C, hard bainite and martensite are excessively generated, which increases load in the cold rolling and hinders productivity. Therefore, the lower limit of the coiling temperature is 450 °C.

### [Pickling Step]

Pickling step may preferably be performed after hot rolling step so as to remove scales on the surface layer of the hot rolled steel sheet. The pickling step is not specifically limited, and may be performed by following a conventional method.

### [Cold Rolling Step]

The hot rolled steel sheet thus pickled is then subjected to cold rolling so as to be rolled into a cold rolled steel sheet having a predetermined sheet thickness as necessary. Although the cold rolling condition is not specifically limited, the cold rolling is preferably performed under a reduction ratio of at least 30 %. A reduction ratio lower than 30 % may fail to promote recrystallization of ferrite, with the result that unrecrystallized ferrite excessively remains, which may deteriorate the ductility and the hole expansion formability.

### [Annealing]

The hot rolled and pickled steel sheet or cold rolled steel sheet is subjected to annealing.

### • Heating condition of annealing: The steel sheet is heated at an average heating rate of 5 °C/s or more to a temperature range of 650 °C or higher.

When the steel sheet is heated to a temperature range below 650 °C or the average heating rate is lower than 5 °C/s, uniformly dispersed fine austenite phase cannot be formed during annealing, and structures including locally concentrated second phases are formed in the final structure so that excellent hole expansion formability is hard to ensure. Meanwhile, when the average heating rate is lower than 5 °C/s, the steel sheet needs to be placed in a furnace longer than normal, which leads to an increase in cost associated with greater energy consumption, and causes deterioration in production efficiency.

### • Soaking condition of annealing: The steel sheet is held in a temperature range of 730 °C to 880 °C for 15 seconds to 600 seconds.

According to the present invention, the steel sheet is held (annealed) in a temperature range of 730 °C to 880 °C, specifically, in the austenite single phase region or in the ferrite-austenite dual phase region, for 15 seconds to 600 seconds. The annealing temperature lower than 730 °C, or the holding (annealing) time shorter than 15 seconds fails to sufficiently develop the recrystallization of ferrite, with the result that unrecrystallized ferrite excessively remains in the steel sheet structure, which deteriorates formability. On the other hand, the annealing temperature higher than 880 °C causes the precipitates to be coarsened, which reduces the strength. The holding time exceeding 600 seconds results in coarsening of ferrite, which impairs hole expansion formability. Thus, the soaking time is 600 seconds or shorter, and preferably 450 seconds or shorter.

### • Cooling condition in annealing: The steel sheet is cooled at an average cooling rate of 3 °C/s to 30 °C/s to a temperature range of 600 °C or lower.

After the above-mentioned soaking, the steel sheet needs to be cooled from the soaking temperature to a temperature range (cooling stop temperature) of 600 °C or below at an average cooling rate of 3 °C/s to 30 °C/s. When the average cooling rate is lower than 3 °C/s, ferrite transformation develops during the cooling, which reduces the volume fraction of martensite, making it difficult to ensure the strength. On the other hand, the average cooling rate exceeding 30 °C/s results in excessive martensite formation, and at the same, such a high cooling rate is difficult to be attained from the facility aspect. Meanwhile, the cooling stop temperature above 600 °C results in excessive pearlite formation, which fails to attain a predetermined volume fraction in the microstructure of the steel sheet, with the result that the ductility and the hole expansion formability are deteriorated.

It should be noted that the above-mentioned average cooling rate is applied to a temperature range of 600 °C or below to a temperature of a hot-dip galvanizing bath (molten bath of zinc), and the average cooling rate of 3 °C/s to 30 °C/s needs to be retained in this temperature range.

### [Hot-dip Galvanizing Process]

The steel sheet is subjected to hot-dip galvanizing after annealing. The steel sheet temperature to be immersed in the molten bath is preferably in a range of (the temperature of the hot-dip galvanizing bath - 40) °C to (the temperature of the hot-dip galvanizing bath + 50) °C. When the temperature of the steel sheet to be immersed in the molten bath falls below (the temperature of the hot-dip galvanizing bath - 40) °C, part of the molten zinc is solidified when the steel sheet is immersed in the molten bath, which may deteriorate the surface appearance of the coating, and thus, the lower limit is set to (the temperature of the hot-dip galvanizing bath - 40) °C. Meanwhile, when the temperature of the steel sheet to be immersed in the molten bath exceeds (the temperature of the hot-dip galvanizing bath + 50) °C, there arises a problem in terms of mass productivity because the temperature of the molten bath is increased.

After the galvanizing process, the steel sheet may be subjected to galvannealing process in a temperature range of 450 °C to 600 °C. The steel sheet thus galvannealed in a temperature range of 450 °C to 600 °C has Fe concentration of 7 % to 15 % in the coating, which improves the coating adhesion property and corrosion resistance property after painting. The temperature lower than 450 °C fails to sufficiently develop the galvannealing, which leads to a reduction in sacrificial corrosion protection ability and a reduction in slidability. The temperature higher than 600 °C causes significant development of galvannealing, which impairs the powdering resistance.

Although other manufacturing conditions are not particularly limited, the above-mentioned series of processes including annealing, hot-dip galvanizing, and galvannealing process may preferably be performed in a continuous galvanizing line (CGL) in the light of productivity. Further, in the hot-dip galvanizing, a galvanizing bath including Al amount of 0.10 to 0.20 % may preferably be used. After the galvanizing process, the steel sheet may be subjected to wiping so as to adjust the coating weight.

### EXAMPLES

In the following, Examples of the present invention are described. However, the present invention is no way limited by Examples below, and may be subjected to appropriate modifications without departing from the gist of the present invention, which are all within the technical scope of the present invention.

Steel samples having the chemical compositions shown in Table 1 were prepared by steel making and casted, so as to manufacture slabs each being 230 mm in thickness. The slabs thus manufactured were subjected to hot rolling under the conditions of the hot-rolling start temperature and of the finish rolling completing temperature (finisher delivery temperature (FDT)) shown in Table 2, which were then cooled after the hot rolling, so as to be formed into hot rolled steel sheets each being 3.2 mm in sheet thickness. The steel sheets thus obtained were coiled at the coiling temperatures (CT) shown in Table 2. Then, the hot rolled steel sheets thus obtained were subjected to pickling, and then to cold rolling under the conditions shown in Table 2, to be formed into cold rolled steel sheets. The cold rolled steel sheets thus obtained were subjected to annealing process in a continuous galvanizing line under the processing conditions shown in Table 2, and subjected to hot-dip galvanizing process, which were then galvannealed at the temperatures shown in Table 2, to thereby obtain hot-dip galvannealed steel sheets. Some of the steel sheets were exempted from the cold rolling, so as to serve as the base steel sheets as hot rolled and pickled. Further, as shown in Table 2, some of the steel sheets were exempted from the galvannealing process.

Here, the galvanizing process was performed under the following conditions: the galvanizing bath temperature: 460 °C; Al concentration in the galvanizing bath: 0.14 mass % (for performing galvannealing process) or 0.18 mass % (for not performing galvannealing process); and the coating amount per one surface: 45 g/m² (two-side coating).

JIS No. 5 tensile test specimens each having a longitudinal direction (tensile direction) in a direction transverse to the rolling direction were collected from the coated steel sheets thus manufactured, and the specimens were subjected to tensile test in accordance with JIS Z2241 (1998) so as to measure the yield strength (YS), the tensile strength (TS), the total elongation (EL), and the yield ratio (YR). A steel sheet with the EL of 26.5 % or more was evaluated as having excellent elongation, and a steel sheet with the YR of 70 % or more was evaluated as having high yield ratio. To evaluate the aging effect, the specimens which had been left for 10 days at 70 °C were subjected to tensile test to measure the EL, and the difference ΔEL compared to the EL of a freshly-manufactured steel sheet yet to be left for aging was calculated. When ΔEL ≤ 1.0 %, it was determined that the EL was less deteriorated after aging. Here, the aging of 10 days at 70 °C corresponds to the aging of 6 months at 38 °C according to the Hundy's report (Metallurgia, vol. 52, p. 203 (1956)).

The hole expansion formability was determined in accordance with the Japan Iron and Steel Federation Standard (JFS T1001 (1996)). The specimens were each punched a hole of 10 mmϕ with a clearance of 12.5 % and set to a test machine with burr facing on the die side. Then, a 60° conical punch was pressed into the hole for shaping, to thereby measure the hole expansion ratio (λ). A steel sheet having λ(%) of 60 % or more was determined as having good stretch flangeability.

To evaluate the microstructure of each of the steel sheets, 3 % nital reagent (3 % nitric acid + ethanol) was used to etch a vertical section (at the 1/4 depth position of the sheet thickness) parallel to the rolling direction of the steel sheet, and the etched section was observed and a micrograph thereof was obtained with the use of an optical microscope of 500 to 1,000 magnifications and of a (scanning or transmission) electron microscope of 1,000 to 10,000 magnifications. Based on the micrograph thus obtained, the volume fraction and the average crystal grain size of ferrite, the volume fraction and the average crystal grain size of martensite, and the volume fraction of pearlite were quantified. Each phase was observed with a field number of 12, so as to obtain the area fraction by the point counting method (in accordance with ASTM E562-83 (1988)), and the area fraction thus obtained was taken as the volume fraction of the phase.

Here, ferrite phase can be observed as a blackish contrast region, while pearlite can be observed as a layered structure in which a sheet-like ferrite and cementite are alternately arranged. Martensite was observed as a whitish contrast region. As to the phases formed at low temperature as the balance, pearlite and bainite can be discriminated from each other in the aforementioned optical microscopic observation or (scanning or transmission) electron microscopic observation, in which pearlite can be observed as a layered structure having a sheet-like ferrite and cementite being alternately arranged while bainite forms a microstructure including cementite and a sheet-like bainitic-ferrite, which is higher in dislocation density as compared to polygonal ferrite. Meanwhile, the presence or absence of retained austenite was determined as follows. The steel sheet surface was polished to the depth of 1/4 of the sheet thickness from the surface layer, and the surface was analyzed by X-ray diffraction method (with a RINT-2200 diffractometer manufactured by Rigaku Corporation) with MoKα radiation as a radiation source at an acceleration voltage of 50 keV, so as to measure the integrated intensity of X-ray diffraction line for each of {200} plane, {211} plane, and the {220} plane of ferrite of Fe and for {200} plane, {220} plane, and {311} plane of austenite of Fe. Based on the measured values thus obtained, the volume fraction of retained austenite was determined using the formula described in "A Handbook of X-Ray Diffraction" (Rigaku Corporation, 2000, pp. 26, 62 to 64). When the volume fraction was 1 % or more, retained austenite is deemed to be present, while retained austenite is deemed to be absent when the volume fraction is less than 1 %.

The average grain size of each of the Nb-based precipitates (carbides) was measured as follows. A thin film manufactured from the obtained steel sheet was observed by a transmission electron microscope (TEM) with a field number of 10 (at magnifications of 500,000 in an enlarged micrograph), so as to obtain the average grain size of each precipitated carbides. The grain size of each carbide was defined in the following manner. That is, when the carbide is in a spherical shape, the diameter thereof was defined as the grain size. When the carbide is in an elliptical shape, the long axis *a* of the carbide and the short axis perpendicular to the long axis were measured, and the square root of the product *a* × *b* of the long axis *a* and the short axis *b* was defined as the grain size. A value obtained by adding the grain sizes of the respective carbides observed with a field number of 10 was divided by the number of the carbides, to thereby obtain the average grain size of the carbides.

Table 3 shows the microstructure, the tensile properties, and the hole expansion formability measured for each steel sheet. It can be appreciated from the results shown in Table 3 that Inventive Examples satisfying the requirements of the present invention all have the volume fraction of at least 90 % for ferrite having an average crystal grain size of 15 µm or less, the volume fraction of 0.5 % or more and less than 5.0 % for martensite having an average crystal grain size of 3.0 µm or less, and the volume fraction of 0.5 % to 5.0% for pearlite, with the result that Inventive Examples are all excellent in formability as having the total elongation of at least 26.5 %, the hole expansion ratio of at least 60 %, with less deterioration in total elongation after aging, while ensuring the tensile strength of at least 590 MPa and the yield ratio of at least 70 %.

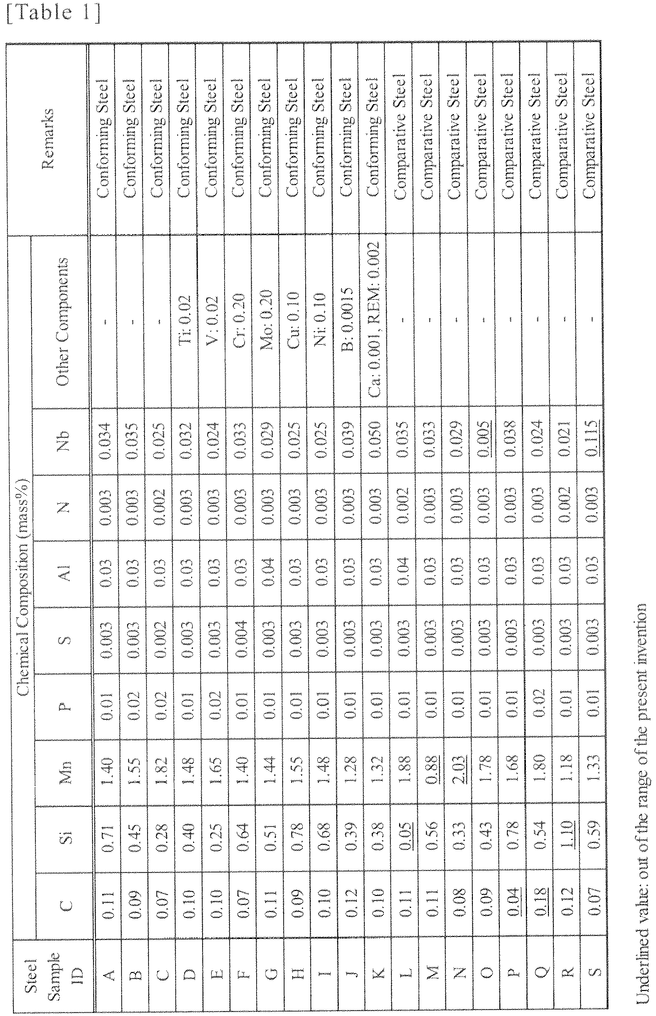

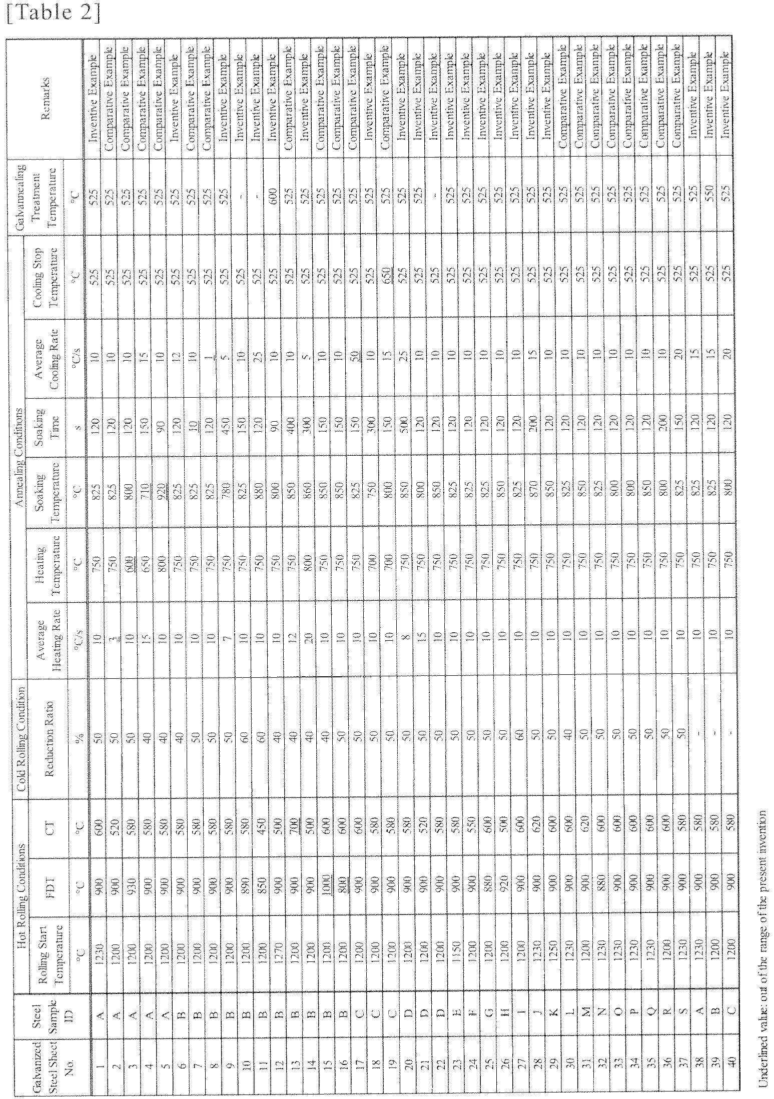

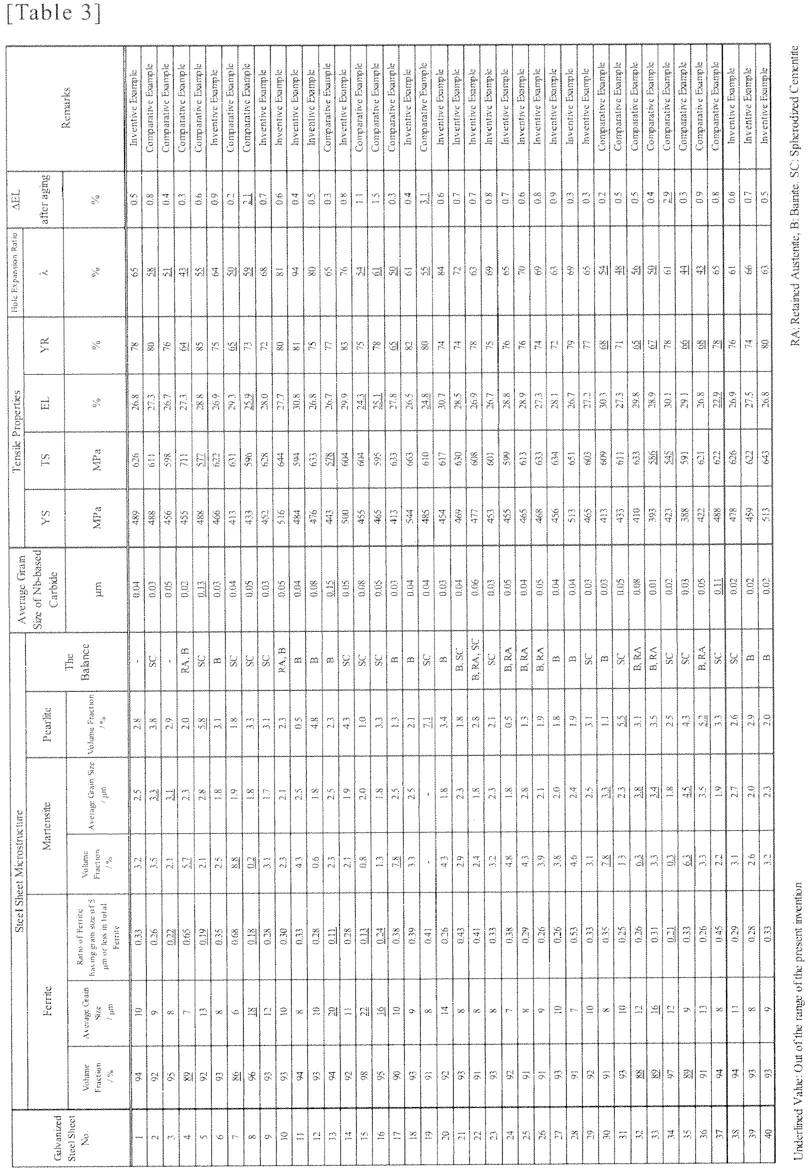

## Claims

1. A hot-dip galvanized steel sheet having a chemical composition consisting of by mass %:
C: 0.05 % to 0.12 %;
Si: 0.20 % to 0.90 %;
Mn: 1.0 % to 1.9 %;
P: 0.005 % to 0.10 %;
S: 0.0005 % to 0.0050 %;
Al: 0.01 % to 0.05 %;
N: 0.0050 % or less;
Nb: 0.010 % to less than 0.050 %;
optionally at least one element selected from:
Ti: 0.10 % or less;
V: 0.10 % or less;
Cr: 0.50 % or less;
Mo: 0.50 % or less;
Cu: 0.50 % or less;
Ni: 0.50 % or less;
B: 0.0030 % or less;
Ca: 0.001 % to 0.005 %;
REM: 0.001 % to 0.005 %;
Sb: 0.01 % or less;
Sn: 0.1 % or less;
Zn: 0.01 % or less, and
Co: 0.1 % or less, and
the balance being Fe and incidental impurities,
wherein the steel sheet has a complex phase that consists of:
ferrite having an average crystal grain size of 15 µm or less excluding 4 µm or less to at least 90 % in volume fraction;
martensite having an average crystal grain size of 3.0 µm or less to 0.5 % or more and less than 5.0 % in volume fraction;
pearlite 0.5 % to 5.0 % in volume fraction; and the balance being a phase generated at low temperature being at least one selected from bainite, retained austenite, and spheroidized cementite, which is less than 5.0 % in total in volume fraction,
wherein the steel sheet further contains Nb-based precipitates having an average grain diameter of 0.10 µm or less, and
wherein the steel sheet has a yield ratio of at least 70 %, a tensile strength of at least 590 MPa and a total elongation of at least of 26.5 % which are measured by a tensile test in accordance with JIS Z2241 (1998), and a hole expansion ratio of at least 60 %.

2. The hot-dip galvanized steel sheet according to claim 1, wherein a value obtained by dividing the volume fraction of ferrite having a grain size of 5 µm or less in the microstructure by the volume fraction of the entire ferrite in the microstructure of the steel sheet satisfies 0.25 or more.

3. The hot-dip galvanized steel sheet according to claim 1 or 2, wherein the galvanized coating is galvannealed coating.

4. A method for manufacturing a hot-dip galvanized steel sheet according to claim 1 or 2, comprising:
preparing a steel slab having the chemical compositions according to claim 1;
hot rolling the steel slab under the conditions with a hot-rolling start temperature of 1,150 °C to 1,270 °C and a finish rolling completing temperature of 830 °C to 950 °C so as to be formed into a hot rolled steel sheet, which is cooled and then coiled at a coiling temperature within a range of 450 °C to 600 °C; which is pickled;
heating thereafter the pickled steel sheet at an average heating rate of at least 5 °C/s to a temperature range of 650 °C or above;
holding the heated steel sheet in a temperature range of 730 °C to 880 °C for 15 seconds to 600 seconds, excluding 120 seconds or less;
subsequently cooling the held steel sheet at an average cooling rate of 3 °C/s to 30 °C/s to a temperature range of 600 °C or below;
subsequently subjecting thereafter the cooled steel sheet to hot-dip galvanizing process so as to be formed into a hot-dip galvanized steel sheet; and
cooling the hot-dip galvanized steel sheet to a room temperature.

5. The method for manufacturing a hot-dip galvanized steel sheet according to claim 4, further comprising:
cold rolling the pickled steel sheet to be formed into a cold rolled steel sheet to be heated.

6. The method for manufacturing a hot-dip galvanized steel sheet according to claim 4 or 5, further comprising:
subjecting the hot-dip galvanized steel sheet to galvannealing process in a temperature range of 450 °C to 600 °C after the hot-dip galvanizing process.

## Patentansprüche

1. Feuerverzinktes Stahlblech, das eine chemische Zusammensetzung hat, die in Massen-% aus:
0,05 % bis 0,12 % C;
0,20 % bis 0,90 % Si;
1,0 % bis 1,9 % Mn;
0,005 % bis 0,10 % P;
0,0005 % bis 0,0050 % S;
0,01 % bis 0,05 % Al;
0,0050 % oder weniger N;
0,010 % bis weniger als 0,050 % Nb;
optional wenigstens einem Element besteht, das ausgewählt wird aus:
0,10 % oder weniger Ti;
0,10 % oder weniger V;
0,50 % oder weniger Cr;
0,50 % oder weniger Mo;
0,50 % oder weniger Cu;
0,50 % oder weniger Ni;
0,0030 % oder weniger B;
0,001 % bis 0,005 % Ca;
0,001 % bis 0,005 % REM;
0,01 % oder weniger Sb;
0,1 % oder weniger Sn;
0,01 % oder weniger Zn, sowie
0,1 % oder weniger Co, und
wobei der Rest Fe sowie zufällige Verunreinigungen sind,
wobei das Stahlblech eine komplexe Phase hat, die aus
Ferrit mit einer durchschnittlichen Kristallkorngröße von 15 µm oder kleiner, ausgenommen 4 µm oder kleiner, bis zu wenigstens 90 % Volumenanteil;
Martensit mit einer durchschnittlichen Kristallkorngröße von 3,0 µm oder kleiner bis zu 0,5 % oder mehr und weniger als 5,0 % Volumenanteil;
Perlit von 0,5 % bis 5,0 % Volumenanteil besteht und der Rest eine bei niedriger Temperatur erzeugte Phase ist, die wenigstens aus Bainit, Restaustenit und Kugelzementit ausgewählt wird und insgesamt einen Volumenanteil von weniger als 5,0 % hat,
wobei das Stahlblech des Weiteren Ausfällungen auf Nb-Basis mit einem durchschnittlichen Korndurchmesser von 0,10 µm oder kleiner enthält, und
das Stahlblech ein Streckgrenzenverhältnis von wenigstens 70 %, eine Zugfestigkeit von wenigstens 590 MPa sowie eine Gesamtdehnung von wenigstens 26,5 %, die mit einem Zugversuch gemäß JIS Z2241 (1998) gemessen werden, und ein Lochaufweitungsverhältnis von wenigstens 60 % hat.

2. Feuerverzinktes Stahlblech nach Anspruch 1, wobei für einen Wert, der ermittelt wird, indem der Volumenanteil an Ferrit mit einer Korngröße von 5 µm oder kleiner in der Mikrostruktur durch den Volumenanteil des gesamten Ferrits in der Mikrostruktur des Stahlblechs dividiert wird, gilt, dass er 0,25 oder mehr beträgt.

3. Feuerverzinktes Stahlblech nach Anspruch 1 oder 2, wobei die Verzinkungsbeschichtung eine Galvannealed-Beschichtung ist.

4. Verfahren zum Herstellen eines feuerverzinkten Stahlblechs nach Anspruch 1 oder 2, umfassend:
Fertigen einer Stahlbramme mit den chemischen Zusammensetzungen nach Anspruch 1;
Warmwalzen der Stahlbramme unter Bedingungen mit einer Warmwalz-Anfangstemperatur von 1.150 °C bis 1.270 °C und einer Fertigwalz-Abschlusstemperatur von 830 °C bis 950 °C, so dass sie zu einem warmgewalzten Stahlblech geformt wird, das abgekühlt und dann bei einer Wickeltemperatur innerhalb eines Bereiches von 450 °C bis 600 °C gewickelt sowie gebeizt wird;
anschließendes Erwärmen des gebeizten Stahlblechs mit einer durchschnittlichen Erwärmungsgeschwindigkeit von wenigstens 5 °C/s auf einen Temperaturbereich von 650 °C oder darüber;
Halten des erwärmten Stahlblechs in einem Temperaturbereich von 730 °C bis 880 °C über 15 Sekunden bis 600 Sekunden, ausgenommen 120 Sekunden oder weniger;
anschließendes Abkühlen des gehaltenen Stahlblechs mit einer durchschnittlichen Abkühlgeschwindigkeit von wenigstens 3 °C/s bis 30 °C/s auf einen Temperaturbereich von 600 °C oder darunter;
anschließend Durchführen eines Feuerverzinkungs-Prozesses des abgekühlten Stahlblechs, so dass es zu einem feuerverzinkten Stahlblech geformt wird; und
Abkühlen des feuerverzinkten Stahlblechs auf eine Raumtemperatur.

5. Verfahren zum Herstellen eines feuerverzinkten Stahlblechs nach Anspruch 4, das des Weiteren umfasst:
Kaltwalzen des gebeizten Stahlblechs, so dass es zu einem kaltgewalzten Stahlblech geformt wird, das erwärmt werden soll.

6. Verfahren zum Herstellen eines feuerverzinkten Stahlblechs nach Anspruch 4 oder 5, das des Weiteren umfasst:
Durchführen eines Galvannealing-Prozesses des feuerverzinkten Stahlblechs in einem Temperaturbereich von 450 °C bis 600 °C nach dem Feuerverzinkungs-Prozess.

## Revendications

1. Tôle d'acier galvanisée par immersion à chaud ayant une composition chimique constituée en % en masse de :
C: 0,05 %à 0,12 % ;
Si : 0,20 % à 0,90 % ;
Mn : 1,0 % à 1,9 % ;
P : 0,005 % à 0,10 % ;
S : 0,0005 % à 0,0050 % ;
Al : 0,01 % à 0,05 % ;
N : 0,0050 % ou moins ;
Nb : 0,010 % à moins de 0,050 % ;
facultativement au moins un élément choisi parmi :
Ti : 0,10 % ou moins ;
V : 0,10 % ou moins ;
Cr : 0,50 % ou moins ;
Mo : 0,50 % ou moins ;
Cu : 0,50 % ou moins ;
Ni : 0,50 % ou moins ;
B : 0,0030 % ou moins ;
Ca : 0,001 % à 0,005 % ;
REM : 0,001 % à 0,005 % ;
Sb : 0,01 % ou moins ;
Sn : 0,1 % ou moins ;
Zn : 0,01 % ou moins, et
Co : 0,1 % ou moins, et
le reste étant Fe et des impuretés accidentelles,
dans laquelle la tôle d'acier a une phase complexe qui est constituée de :
ferrite ayant une taille moyenne de grain cristallin de 15 µm ou moins à l'exclusion de 4 µm ou moins pour au moins 90 % en fraction volumique ;
martensite ayant une taille moyenne de grain cristallin de 3,0 µm ou moins pour 0,5 % ou plus et moins de 5,0 % en fraction volumique ;
perlite entre 0,5 % et 5,0 % en fraction volumique ; et le reste étant une phase générée à basse température qui est au moins une phase choisie parmi de la bainite, austénite retenue, et cémentite sphéroïdisée, qui est inférieure à 5,0 % au total en fraction volumique,
dans laquelle la tôle d'acier contient en outre des précipités à base de Nb ayant un diamètre moyen de grain de 0,10 µm ou moins, et
dans laquelle la tôle d'acier a un rapport d'élasticité d'au moins 70 %, une résistance à la traction d'au moins 590 MPa et un allongement total d'au moins 26,5 % qui sont mesurés par un essai de traction conformément à la norme JIS Z2241 (1998), et un taux d'expansion de trous d'au moins 60 %.

2. Tôle d'acier galvanisée par immersion à chaud selon la revendication 1, dans laquelle une valeur obtenue en divisant la fraction volumique de ferrite ayant une taille de grain de 5 µm ou moins dans la microstructure par la fraction volumique de la ferrite entière dans la microstructure de la tôle d'acier satisfait à 0,25 ou plus.

3. Tôle d'acier galvanisée par immersion à chaud selon la revendication 1 ou 2, dans laquelle le revêtement galvanisé est un revêtement recuit après galvanisation.

4. Procédé de fabrication d'une tôle d'acier galvanisée par immersion à chaud selon la revendication 1 ou 2, comprenant les étapes consistant à :
préparer une brame d'acier ayant les compositions chimiques selon la revendication 1 ;
laminer à chaud la brame d'acier sous les conditions avec une température de début de laminage à chaud de 1 150°C à 1 270°C et une température d'achèvement de laminage de finition de 830°C à 950°C de manière à être formée en une tôle d'acier laminée à chaud, qui est refroidie puis enroulée à une température d'enroulement dans une plage de 450°C à 600°C ; qui est décapée ;
chauffer ensuite la tôle d'acier décapée à une vitesse de chauffage moyenne d'au moins 5°C/s jusqu'à une plage de température de 650°C ou plus ;
maintenir la tôle d'acier chauffée dans une plage de température de 730°C à 880°C pendant 15 secondes à 600 secondes, à l'exclusion de 120 secondes ou moins ;
refroidir ensuite la tôle d'acier maintenue à une vitesse de refroidissement moyenne de 3°C/s à 30°C/s jusqu'à une plage de température de 600°C ou moins ;
par la suite, soumettre ensuite la tôle d'acier refroidie à un processus de galvanisation par immersion à chaud de manière à être formée en une tôle d'acier galvanisée par immersion à chaud ; et
refroidir la tôle d'acier galvanisée par immersion à chaud à température ambiante.

5. Procédé de fabrication d'une tôle d'acier galvanisée par immersion à chaud selon la revendication 4, comprenant en outre :
le laminage à froid de la tôle d'acier décapée pour être formée en une tôle d'acier laminée à froid à chauffer.

6. Procédé de fabrication d'une tôle d'acier galvanisée par immersion à chaud selon la revendication 4 ou 5, comprenant en outre l'étape consistant à :
soumettre la tôle d'acier galvanisée par immersion à chaud à un processus de recuit après galvanisation dans une plage de température de 450°C à 600°C après le processus de galvanisation par immersion à chaud.
